(19) Europäisches Patentamt
European Patent Office
Office européen des brevets

(11) Publication number: **0 268 805 B1**

(12) # EUROPEAN PATENT SPECIFICATION

(45) Date of publication of the patent specification: **30.05.90**

(51) Int. Cl.[5]: **B29C 67/22**, C08J 9/36 // B29K25:00

(21) Application number: **87115045.4**

(22) Date of filing: **15.10.87**

(54) **Process for reducing the density of an extruded foam board of a thermoplastic resin.**

(30) Priority: **27.10.86 FR 8614882**

(43) Date of publication of application: **01.06.88 Bulletin 88/22**

(45) Publication of the grant of the patent: **30.05.90 Bulletin 90/22**

(84) Designated Contracting States: **BE DE ES FR GB GR IT NL SE**

(56) References cited:
**GB-A-1 051 398**
**GB-A-1 073 813**
**GB-A-1 151 117**
**US-A-3 119 147**
**US-A-3 381 077**

(73) Proprietor: **THE DOW CHEMICAL COMPANY, 2030 Dow Center Abbott Road P.O. Box 1967, Midland Michigan 48640-1967(US)**

(72) Inventor: **Vo, Chau V., 64, Route Bischwiller, F-67500 Hagenau(FR)**
Inventor: **Eschenlauer, Georges, 9, Rue Belle Vue, F-67620 Soufflenheim(FR)**

(74) Representative: **Sternagel, Hans-Günther, Dr. et al, Patentanwälte Dr. Michael Hann Dr. H.-G. Sternagel Sander Aue 30, D-5060 Bergisch Gladbach 2(DE)**

**EP 0 268 805 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for reducing the density of an extruded foam board. By "reducing the density of an extruded foam board" is meant the further expansion of an already foamed extruded board.

Various processes for reducing the density of extruded foamed sheets and extruded foam boards are known.

The reduction of the density of thin polystyrene ("PS") sheets of the kind known as "paper", which is partially expanded polystyrene in sheet form, can be attained without great difficulty by post-expansion of PS sheets. GB patent specification 1,151,117 teaches that the post-expansion can be carried out by the application of heat, steam or boiling water to the PS paper. Furthermore, GB patent 1,151,117 teaches subjecting the PS paper to the action of steam whilst simultaneously maintaining the PS paper in contact with water condensed from the steam. It is taught that a sheet of original thickness of about 1.5 mm can be expanded to a sheet of about 12 mm thickness. EP-A-0 124 337 discloses that a conventional method of obtaining foam density reduction of polystyrene sheets is to age them for 3 to 5 days and then to employ radiant heating to expand the foam sheets thus aged. A density reduction of less than 20 percent is attained by this method. Furthermore, EP-A-0 124 337 discloses a process of thermoforming a polystyrene sheet by transporting the sheet through an atmosphere of "at least predominantly" steam at a temperature of at least 102°C, maintaining the sheet in the steam atmosphere for a time sufficient to cause a decrease in the density and then deforming the sheet into the desired shape.

British patent specification 1,051,398 discloses a process of foaming a foamable polystyrene sheet of about 0.8 mm (30 mils) by heating the sheet simultaneously on one side by contact of a roll and on the other side by a steam spray. Several rolls and steam sprays are arranged in a chamber through which the foamable polystyrene sheet passes. The expanded sheet is then subjected in a separate chamber to hot air for drying the sheet and for maintaining its plasticity for subsequent pressure forming.

US patent 3,381,077 discloses a method of introducing an impermeant inflatant such as a perhaloalkane into the closed cells of a flexible cellular structure, e.g. produced of polyethylene. In a first step, the cellular structure is exposed to a plasticising fluid which should have an atmospheric boiling point of less than about 85°C such as methylene chloride. The wet cellular structure is then transferred to a vessel containing the impermeant inflatant. From there it is transferred to a vessel where the impermeant inflatant is stripped off with water or steam. In a further vessel, the cellular structure is then exposed to heated air for inflating the foam. The process is useful for cellular structures in the form of a filament, ribbon, sheet or block having at least one linear dimension of less than 0.6 cm.

It has been recognised by those skilled in the art that the methods of expanding thin polystyrene sheets, which typically have a thickness of about 1 mm to 4 mm, are not applicable to foam boards of a thermoplastic resin which have a thickness of 1 cm or more. In thin PS sheets, for example produced via an extrusion process, the sheet is evenly cooled after extrusion whereby a substantially uniform foam results throughout its thickness. When producing a foam board via an extrusion process, the surface of the foam however cools more quickly than the core of the foam. The surface of the foam becomes semirigid and the foam cells at the surface of the foam then collapse due to continued expansion pressure from inside the foam. Further expansion of the foam is prevented. The well known, high density skin is thereby produced.

A considerable amount of research and effort have been spent by those skilled in the art to find methods of reducing the density of extruded foam boards, i.e. methods for post-expanding extruded foam boards made from thermoplastic resins.

US patent 4,552,904 discloses a process for producing a heat- and sound-insulating rigid foam from a thermoplastic resin comprising the step of expanding an extrusion-foamed polystyrene plate in a expansion chamber. Single plates of predetermined widths and lengths are placed in the expansion chamber and allowed to expand. From Fig. 4 of that patent it becomes evident that the density of the foam is not significantly reduced in air of 90°C, i.e. by merely heating the foam. The foam density is, however, represented to be considerably reduced in water or steam at 90°C. This expansion method is useful when the expansion of the foam plates is carried out in the discontinuous process disclosed in that patent, i.e. in a process where the foam plates are processed, cut to the desired size and expanded in a separate process step in an expansion chamber.

Fig. 3 of US patent 4,552,904 shows that a variety of density reductions meeting specific needs in the industry can be obtained by varying the temperature of the steam, by varying the residence time of the foam plate in the steam chamber or both. Varying the steam temperature is not convenient since partial vacuum is required to obtain steam in the chamber of less than 100°C or a pressure of more than one bar is required to maintain steam in the steam chamber at a temperature of more than 100°C. Varying the residence time of a foam plate or board in the steam chamber is not very convenient either. The extruded foam boards made from a thermoplastic resin are preferably produced in a continuous process. It may be desirable for the freshly prepared foam board to be continuously transported to the expansion chamber and expanded there. Obviously, such a process does not allow substantial and frequent variation in production speed and accordingly in residence time in the expansion chamber.

Accordingly, it is an object of the invention to provide a process for reducing the density of an extruded foam board in a controllable fashion which allows controllable density reduction without applying a decreased or increased pressure to the device used for expanding the extruded foam board.

It is another object of the invention to provide a process for reducing the density of an extruded foam board which allows transportation of a continuous, extruded foam board to and from the device used for expanding the extruded foam board and which allows controllable density reduction of the foam without substantial variation in transportation speed.

The object of the invention is attained by a process for reducing the density of an extruded foam board made from a thermoplastic resin and having a thickness of 1 cm or more in a controllable fashion in an expansion device by exposing it simultaneously or in sequence to heated air and steam and by controlling the air temperature in the range from 60°C to 150°C and/or the relative humidity in the range from 20 to 100 percent in the expansion device, wherein the density reduction is carried out at a pressure of about one bar.

The process of the present invention allows the density reduction of the extruded foam board in a highly controllable fashion. The controllable density reduction is obtainable without applying a decreased or increased pressure to the expansion device. Furthermore, the controllable density reduction is obtainable without varying the residence time of the foam board in the expansion device and accordingly without varying the transport speed of a continuous, extruded foam board from and to the expansion device.

## Detailed description of the Invention

The process of the present invention is preferably carried out in an expansion device which comprises one or more chambers whereof at least one chamber is provided with an air inlet port which is in communication with an air source and at least one chamber, which is the same as or different from the first chamber, is provided with a steam inlet port, which is the same as or different from the air inlet port and which steam inlet port is in communication with a steam source.

The process of the present invention is useful for reducing the density of any extruded foam board made from a thermoplastic resin which has a thickness of 1 cm or more.

Preferably, the thickness of the foam boards is from about 1.5 cm, more preferably from about 2 cm, most preferably from about 3 cm, up to about 25 cm, more preferably up to about 20 cm and most preferably up to about 15 cm. The foam boards can be of any suitable width, e.g. from 25 to 150 cm, preferably from 30 to 125 cm. The length of the foam board is not critical, typical lengths are e.g. from 0.5 to 5 m, preferably from 1 to 3 m. Particularly preferred are continuous ("endless") foam boards which have the stated width and thickness.

Preferably, the water vapour permeability of the foam is less than 1.8 perm inch (2.62 $ng.Pa.s^{-1}\cdot m^{-1}$) according to ASTM C-355-64.

The process of the present invention is not restricted to a particular class of polymers. Preferred examples of thermoplastic resins are alkenyl aromatic synthetic resins and blends of alkenyl aromatic synthetic resins with other polymers, such as polyphenylene oxide. Preferred blends are polystyrene and polyphenylene oxide.

By the term "alkenyl aromatic synthetic resins" is meant a solid (under standard conditions of 1 bar and 20°C) polymer of one or more polymerisable alkenyl aromatic compounds. The polymer or copolymer ordinarily comprises, in chemically combined form, 60 percent or more by weight of at least one alkenyl aromatic compound having the general formula

$$
\begin{array}{c} R \\ | \\ Ar - C = CH_2 \end{array}
$$

wherein Ar represents an aromatic hydrocarbon radical or an aromatic halo-hydrocarbon radical of the benzene series, and R is hydrogen or the methyl radical.

Examples of such alkenyl aromatic resins are the solid homopolymers of styrene, alpha-methylstyrene, o-methylstyrene, m-methylstyrene, p-methylstyrene, o-ethylstyrene, m-ethylstyrene, p-ethylstyrene, the vinylxylenes, o-chlorostyrene, m-chlorostyrene, p-chlorostyrene, o-bromostyrene, m-bromostyrene or p-bromostyrene; the solid copolymers of one or more of such alkenyl aromatic compounds with minor amounts of other readily polymerisable olefinic compounds such as methylmethacrylate, acrylonitrile, maleic anhydride, citraconic anhydride, itaconic anhydride, methacrylic acid, acrylic acid or rubber reinforced (either natural or synthetic) styrene polymers. The preferred alkenyl aromatic synthetic resins are polystyrene and poly(p-methylstyrene). Mixtures of these resins are also useful. The weight average molecular weight ($M_w$) of these alkenyl aromatic compounds, measured according to gel permeation chromotography, is preferably from about 100,000, more preferably from about 150,000 and preferably up to about 400,000, more preferably up to about 350,000.

Such alkenyl aromatic synthetic resins are well known in the art. The manufacture of extruded foams

from the thermoplastic resins is discussed in details in US patents 2,409,910; 2,515,250; 2,699,751; 2,848,428; 2,928,130; 3,121,130; 3,121,911; 3,770,688; 3,815,674; 3,960,792; 3,966,381; 4,085,073; 4,146,563; 4,229,396; 4,312,910; 4,421,866; 4,438,224; 4,454,086 and 4,486,550.

In general, the thermoplastic resin is heat-plastified and a volatile fluid foaming agent is injected and mixed into the heat-plastified material under a pressure sufficiently high that foaming of the resulting mixutre is prevented. The mixture passes then to one or more coolers where the temperature of the mixture is reduced and from there to a die which extrudes a generally rectangular board at atmospheric pressure.

Appropriate blowing agents are known. Any known compound capable of generating an inert gas under the conditions used to produce the foam (e.g. by reaction to produce a gas or by volatilization) is useful. It is desirable to use aliphatic hydrocarbons, cyclic aliphatic hydrocarbons and halogenated aliphatic hydrocarbons. Preferred examples are propane, butane, pentane (e.g. normal pentane, isopentane or neopentane), hexane, heptane and petroleum ether; cyclopentane and cyclohexane; ethyl chloride, methyl chloride, dichloromethane, 1,2-dichloro-1,1,2-trifluoroethane, pentafluorocylcobutane, dichloro-difluoromethane, 1,2,2,-trifluoro-1,1,2-trichloroethane, fluorotrichloromethane, the dichlorotetrafluoroethanes and 1-chloro-1,1-difluoroethane. Gases like carbon dioxide, ammonia, air, nitrogen, helium or other inert gases are also useful blowing agents. Mixtures of such blowing agents are also useful. Of particular importance is a mixture of blowing agents comprising from 3 to 45 weight percent carbon dioxide, from 5 to 97 weight percent ethyl chloride and from 0 to 90 weight percent dichlorodifluoromethane and/or 1-chloro-1,1-difluoroethane, based on the total weight of blowing agent mixture. One particularly preferred mixture comprises from 3 to 25 weight percent carbon dioxide, from 5 to 60 weight percent ethyl chloride and from 30 to 90 weight percent dichlorodifluoromethane and/or 1-chloro-1,1-difluoroethane. Another preferred mixture comprises from 3 to 45 weight percent carbon dioxide, from 55 to 90 weight percent ethyl chloride and from 0 to 25 weight percent dichlorodifluoromethane and/or 1-chloro-1,1-difluoroethane. From 1, preferably from 3 weight parts, to 18, preferably to 15 weight parts blowing agent are ordinarily used per 100 weight parts thermoplastic resin.

After extrusion, the foam board is subjected to the process of the present invention in which it is further expanded by exposing it simultaneously or in sequence to heated air and to steam. Although the process of the present invention is not restricted to a continuous process, it is preferred that a continuous board of a foamed thermoplastic material having a thickness of 1 cm or more is transported through an expansion device where the extruded foam board is exposed to heated air and steam in a continuous process. It is preferred to transport a freshly produced foam board emerging from the continuous foam production line through the expansion device. Most preferably, the core of the foam is still hot, i.e. has a temperature of from about 80°C, preferably from about 90°C up to about 160°C, preferably up to about 140°C. The expansion device may be installed close to the foam production line or several metres away from it. The process of the present invention is preferably carried out at about 1 bar (at ambient pressure).

Fig. 1 illustrates a longitudinal fractional view of a schematic illustration of a first embodiment of the expansion device useful in the process of the present invention.

Fig. 2 illustrates a longitudinal fractional view of a schematic illustration of a second embodiment of the expansion device useful in the process of the present invention.

The process of the present invention and the expansion device useful therein are explained in more details with respect to the drawings.

Referring to Fig. 1, the expansion device 10 is designed to receive an extruded foam board 32 made from a thermoplastic resin from a suitable source such as a continuous foam production line. The inlet end 24 and outlet end 26 of the expansion device 10 should have at least the size of the cross-section of the extruded foam board 32. Such extruded foam boards 32 are transportable into and through the expansion device 10 by any suitable transport means such as roller conveyors 34. Outside the expansion device 10, near the outlet end 26 transport means such as driven rolls (not shown) can be located. Further transport means (not shown) can be located between the foam production line and the inlet end 24 of the expansion device 10.

The expansion device 10 comprises air chambers 12A, 12C, 12E in which an atmosphere comprising mainly heated air is maintained. The temperature in these air chambers is preferably from about 60°C and more preferably from about 80°C to about 150°C and more preferably to about 140°C. The temperature of the heated air need not be the same in all air chambers 12A, 12C, 12E. The air chambers 12A, 12C, 12E are equipped with air inlet ports 18A, 18B, 18C which are in communication with air sources 20A, 20B, 20C in which the air is preferably preheated. Preferably, the heated air is circulated in the air chambers 12A, 12C, 12E. The airflow is preferably from 0.5 m/sec., most preferably from 1.0 m/sec. to 15 m/sec., most preferably to 12 m/sec. In general, the air supply from the air sources 20A, 20B, 20C should be sufficient to replace the air diffusing out of the air chambers 12A, 12C, 12E through leaks in the expansion device 10. The air chambers 12A, 12C, 12E can be provided with auxiliary heaters (not shown) for maintaining the appropriate temperature in the air chambers.

The expansion device 10 further comprises steam chambers 12B, 12D in which an atmosphere comprising mainly steam is maintained. The steam chambers 12B, 12D are equipped with steam inlet ports 14A, 14B which are in communication with steam sources 16A, 16B. The steam sources are preferably suitable to provide steam of one atmosphere pressure. The steam chambers 12B, 12D can be equipped with auxiliary heaters (not shown) in order generally to maintain a temperature of about 100°C. Depending on the desired density reduction and on the size of the steam chambers 12B, 12D, the steam supply can be varied. In general the steam supply is from 10, preferably from 40, to 400, preferably to 250 kg steam/hour $m^3$ steam chamber. In general, the steam supply from the steam sources 16A, 16B should be sufficient to replace any steam condensed on or penetrated into the foam or condensing on the chamber walls or diffusing out of the chambers 12B, 12D through leaks in the expansion device 10.

Although the expansion device 10 illustrated by Fig. 1 comprises three air chambers wherein an atmosphere comprising mainly heated air is maintained and two steam chambers wherein an atmosphere comprising mainly steam is maintained, the expansion device is not restricted to such an embodiment. The expansion device can comprise one or more air chambers and combined therewith or separately one or more steam chambers. Preferred arrangements of the air chambers and steam chambers are for example

a) air chamber / steam chamber
b) air chamber / steam chamber / air chamber.

Furthermore, the air sources 20A, 20B, 20C can be combined to one air source and the steam sources 16A, 16B can be combined to one steam source. The expansion device 10 can be equipped either with the driven rolls (not shown) or the roller conveyors 34 or with both.

Referring to Fig. 2, the expansion device 11 comprises an inlet end 24 and outlet end 26. The foam transport means, e.g. the roller conveyors 34, the driven rolls (not shown) and the optional transport means (not shown) between the foam production line (not shown) and expansion device 11 can be similar to those described with reference to Fig. 1. During one embodiment of the process of the present invention the extruded foam board 32 passes from the continuous foam production line through a single chamber 12 in which an atmosphere of steam and heated air is maintained. Chamber 12 is equipped with one or more steam inlet ports 14 which are in communication with a steam source 16. The chamber is furthermore equipped with one or more air inlet ports 18 which are in communication with an air source 20 in which the air is preferably preheated. The temperature in chamber 12 is preferably from about 60°C, more preferably from about 80°C, to about 150°C, more preferably to about 140°C. It is preferred to maintain the relative humidity in the chamber from 20 percent, preferably from 35 percent, to 100 percent, preferably to 85 percent. Chamber 12 can be provided with auxiliary heaters (not shown) in order to maintain the desired chamber temperature.

Although only one chamber 12 is shown in Fig. 2, it may be useful to arrange several chambers 12 in line through which the extruded foam board 32 is passed in the process of the present invention. Different temperatures, relative humidities and air-flow rates can be maintained in the different chambers. It may further be desirable that one or more chambers 12 are arranged in line with one or more steam chambers 12B, 12D and/or one or more air chambers 12A, 12C, 12E described with respect to Fig. 1. It is preferred to arrange an air chamber 12D at the outlet end of chamber 12 for drying the extruded foam board 32 after the expansion in the process of the present invention.

The residence time of the extruded foam board 32 in the expansion device 10 or 11 depends on various factors such as desired density and the supply speed of the extruded foam board 32 from the continuous foam production line. In general, the residence time of the extruded foam board 32 in the expansion device 10 or 11 is from 5, preferably from 10 sec. to 200, preferably to 90 sec. At a given residence time in the expansion device 10 or 11, the density reduction of the foam can be controlled and varied by varying the temperature and/or the humidity in the expansion device whereby the total pressure in the expansion device can be maintained at about one bar, i.e. at ambient pressure.

The process of the present invention allows controllable variation of the foam density without the necessity of varying the residence time of the extruded foam board in the expansion device and without varying the total pressure in the expansion device. By the process of the present invention, density reductions of up to about 30 precent, preferably from about 15 to about 30 percent, are generally achieved, based on the density of the extruded foam board before alteration in the process of the present invention.

The process of the present invention is further illustrated in the following examples which should not be construed to limit the invention. In all examples, the extruded foam boards are continuously produced and continuously expanded according to the process of the present invention.

EXAMPLE 1

A polystyrene foam is prepared from a composition containing polystyrene, 1.8 percent of common additives and a volatile fluid foaming agent mixture of 7 percent dichlorodifluoromethane, 0.7 percent carbon dioxide and 2.4 percent methyl chloride, all percents being based on the weight of the polystyrene.

A 50 mm diameter extruder is used which feeds a rotary mixer. The rotary mixer discharge is passed through a cooler. The discharge from the cooler is passed to a slot die. The foaming temperature is about 120°C to 130°C. The produced foam is discharged from the slot die at a rate of about 7 m/min. The continuously produced foam board has a thickness of 4 cm.

One extruded foam board (the control) is not further expanded according to the process of the invention. The extruded foam boards of the Examples and of the Comparative Example listed in Table I are guided into an expansion device which consists of a steam chamber. (Comparative Example) or of a combination of 1) a hot air chamber and 2) a steam chamber (Examples).

The results are set forth in Table I. The chamber residence time in Table I relates to the total residence time in all chambers, i.e., in the Comparative Example the residence time in the steam chamber is 48 sec., whereas in the Examples in Table I the residence time is 24 sec. in the steam chamber and 24 sec. in the hot air chamber (48 sec, in total).

TABLE I

| | Total residence time (sec.) | Hot air temperature (°C) | Steam flow rate (kg/hr·m$^3$ steam chamber) | Density (kg/m$^3$) | Skin Quality |
|---|---|---|---|---|---|
| Control foam | – | – | – | 37.5 | Excellent |
| Foam postexpanded by steam alone (c) | 48 | – | 130 | 30.5 | Good |
| Postexpanded foam | 48 | 60 | 130 | 31.3 | Excellent |
| Postexpanded foam | 48 | 80 | 130 | 31.1 | Excellent |
| Postexpanded foam | 48 | 100 | 130 | 30.5 | Good |
| Postexpanded foam | 48 | 120 | 130 | 30.3 | Good |
| Postexpanded foam | 48 | 140 | 130 | 29.7 | Good |

(c) comparative

These results show the advantage of using a combination of hot air and steam for the reduction of density in a highly controllable fashion. Without modification of the extrusion rate, of the extruder line variables or of the blowing agent formulation or level, variable densities of the foam can be obtained by simple variation of the temperature in the hot air chamber in combination with the subsequent exposure to the steam in the steam chamber. In addition, the skin quality of the post expanded foam is improved with lowered hot air temperature.

EXAMPLE 2

Example 1 is repeated with the exception that the blowing agent is a mixture of 7 percent dichlorodifluoromethane, 1.2 percent carbon dioxide and 3.5 ethyl chloride, based on the weight of the polystyrene. After production, the extruded foam board is guided into the expansion device of Example 1 with the exception that a further hot air chamber is added after the steam chamber to the end of the expansion device and used as a drier.

The results are shown in Table II below:

TABLE II

| | Total residence time (sec.) | Temperature of 1st hot air chamber (°C) | Steam rate (kg/hr·m$^3$ steam chamber) | Temperature of hot air drier (°C) | Density (kg/m$^3$) | Foam surface |
|---|---|---|---|---|---|---|
| Control foam | – | – | – | – | 36.5 | Dried |
| Foam postexpanded by steam alone (c) | 42 | – | 112 | – | 29.4 | Wet |
| Foam postexpanded by present invention | 42* | 140 | 112 | 100 | 27.6 | Dried |

(c) comparative

*residence time in first hot air chamber, in steam chamber and in hot air drier = 14 seconds each

The hot air dryer is useful to provide a dried surface for further processing, such as printing, whereas the surface of the foam which has been expanded with steam alone is rather wet.

EXAMPLE 3

Example 1 is repeated with the exception that the blowing agent employed is a 1:1 by weight mixture of dichlorodifluoromethane and methyl chloride. The blowing agent is fed at a concentration of 10.5 percent by weight of the styrene polymer.

After production, the extruded foam board is guided into the expansion device as illustrated in Figure 1. The total residence time of the extruded foam board in the Examples in Table III is 72 seconds, i.e. the residence time in each of the chambers is 14.4 seconds.

The results are set forth in Table III as follows:

TABLE III

| | Temp. of 1st hot air chamber (°C) | Steam pressure in 1st steam chamber (bar) | Temp. of 2nd hot air chamber (°C) | Steam pressure in 2nd steam chamber (bar) | Temp. of 3rd hot air chamber (°C) | Density ($kg/m^3$) |
|---|---|---|---|---|---|---|
| Control foam | – | – | – | – | – | 31.5 |
| Postexpanded foam | 125 | 1 | 110 | 1 | 95 | 25.2 |
| Postexpanded foam | 140 | 1 | 120 | 1 | 110 | 23.0 |

**The results in Table III show the average of using a combination of hot air and steam for the reduction of density in a controllable fashion.**

EXAMPLE 4

A polystyrene foam is prepared from a composition containing polystyrene, 1.8 percent of common additives and a volatile fluid foaming blowing agent mixture composed of
ethyl chloride (EtCl),
carbon dioxide (CO2),
dichlorodifluoromethane (F-12), or
1-chloro-1,1-difluoroethane (F-142b)
in different combinations and weight amounts. All percentages in Table IV are based on the weight of polystyrene.

A 50 mm diameter extruder is used which feeds a rotary mixer. The rotary mixer discharge is passed through several coolers. The discharge from the last cooler is passed to a slot die. The foaming temperature is about 120°C to 130°C. The produced foam is discharged from the slot die at a rate in a range of 7 to 12 m/min.

The extruded foam boards of the Examples listed in Table IV are guided into the expansion device as illustrated in Figure 2. The density of the foam samples is measured

a) before and
b) after passing them through the expansion device of Figure 2.

The results are set forth in Table IV.

TABLE IV

| EtCl | C02 | F-12 | F-142 | Density before (a) | Chamber tempera-ture | Relative Humidity | Residence time | Density after (b) |
|---|---|---|---|---|---|---|---|---|
| % | % | % | % | $kg/m^3$ | °C | % | sec | $kg/m^3$ |
| 3.6 | 1.2 | 7.2 | – | 33.4 | 100 | 100 | 12 | 28.7 |
| 3.6 | 1.2 | 7.2 | – | 33.4 | 108 | 51 | 12 | 27.9 |
| 3.6 | 1.2 | 7.2 | – | 33.4 | 115 | 42 | 12 | 28.7 |
| 3.5 | 1.2 | 7.0 | – | 33.2 | 118 | 41 | 13 | 28.4 |
| 5.0 | 1.0 | 7.0 | – | 31.6 | 115 | 44 | 13 | 26.0 |
| 2.5 | 0.7 | 9.0 | – | 36.6 | 116 | 47 | 14 | 29.6 |
| 2.6 | 1.6 | – | 7.8 | 33.9 | 92 | 100 | 8 | 29.7 |
| 2.6 | 1.6 | – | 7.8 | 33.9 | 122 | 47 | 9 | 26.9 |
| 3.0 | 1.8 | – | 9.1 | 30.6 | 118 | 53 | 8 | 25.3 |
| 1.4 | 1.0 | – | 9.6 | 35.5 | 119 | 52 | 11 | 29.6 |
| 1.7 | 1.1 | – | 11.2 | 32.9 | 120 | 48 | 10 | 27.4 |

Table IV shows that significant density reduction is obtained in the process of the present invention.

EXAMPLE 5

Example 4 is repeated with the exception that the polymer is a mixture of polystyrene and polyphenylene oxide in a weight ratio 98:2. The amounts of the components in the blowing agent mixture are as follows

dichlorodifluoromethane: 7.2 percent
carbon dioxide :1.2 percent
ethyl chloride :3.6 percent

The extruded foam board discharged from a slot die is guided into the expansion device as illustrated in Figure 2 to which a hot air chamber is added as a drier.
The results are shown in the Table V.

EXAMPLE 6

Example 4 is repeated with the exception that the foam is produced from a styrene/acrylic acid copolymer (acrylic acid content 1 weight percent).
The blowing agent is a mixture of dichlorodifluoromethane, carbon dioxide and ethylchloride; the amounts of each component are as follows:
- dichlorodifluoromethane: 9 percent,
- carbon dioxide: 1 percent,
- ethyl chloride: 2.5 percent,

based on the weight of the styrene/acrylic acid copolymer.
The extruded foam board discharged from a slot die is guided into the expansion device as illustrated in Figure 2 to which a hot air chamber is added as a drier.
The results are set forth in Table VI.

TABLE V

| | Total residence time (sec.) | Chamber temperature (°C) | Relative humidity (%) | Air drier temperature (°C) | Density ($kg/m^3$) | Skin quality |
|---|---|---|---|---|---|---|
| Control foam | – | – | – | – | 34.1 | Good |
| Foam postexpanded by hot air alone (c) | 20 | 100 | 10 | 100 | 33.2 | Good |
| Foam postexpanded by steam alone (c) | 20 | 100 | 100 | – | 28.1 | Good |
| Foam postexpanded with combined steam and hot air | 20 | 115 | 44 | 110 | 27.1 | Good |

(c) comparative

| | Total residence time (sec.) | Chamber temperature (°C) | Relative humidity (%) | Density ($kg/m^3$) |
|---|---|---|---|---|
| Control foam | – | – | – | 34.0 |
| Postexpanded foam | 19 | 92 | 100 | 31.7 |
| Postexpanded foam | 20 | 95 | 100 | 30.2 |
| Postexpanded foam | 19 | 115 | 52 | 28.6 |
| Postexpanded foam | 19 | 123 | 40 | 27.5 |

Table VI shows that by controlling the chamber temperature and the relative humidity, the foam density reduction can be controllably increased from 6.8% to 19.1% after only 20 seconds post expansion in the steam/hot air environment.

## Claims

1. A process for reducing the density of an extruded foam board made from a thermoplastic resin a having a thickness of 1 cm or more in a controllable fashion in an expansion device (10 or 11) by exposing it simultaneously or in sequence to heated air and steam and by controlling the air temperature in the range from 60°C to 150°C and/or the relative humidity in the range from 20 to 100 percent in the expansion device, wherein the density reduction is carried out at a pressure of about one bar.

2. The process of claim 1 wherein the residence time of the foam board in the expansion device is kept constant.

3. The process of claim 1 or 2 wherein a continuous, extruded foam board of a thermoplastic resin is transported through the expansion device.

4. The process of any of claims 1 to 3, wherein the thermoplastic resin is a styrenic polymer, preferably polystyrene or poly(p-methylstyrene).

5. The process of any of claims 1 to 4 wherein the density reduction of the foam board is carried out in an expansion device (11) comprising at least one chamber (12) in which simultaneously an atmosphere of steam and heated air is maintained and which is provided with

a) a steam inlet port (14) which is in communication with a steam source (16) and

b) an air inlet port (18) which is the same as or different from the steam inlet port (14) and which air inlet port is in communication with an air source (20).

6. The process of claim 5 wherein the controlled relative humidity in the chamber is from 35 to 85 percent.

7. The process of any of claims 1 to 4 wherein the density reduction of the foam board is carried out in an expansion device (10) comprising

a) at least one air chamber (12A, 12C or 12E) in which an atmosphere comprising mainly heated air is

maintained and which is provided with an air inlet port (18A, 18B or 18C) which is in communication with an air source (20A, 20B or 20C) and

b) at least one steam chamber (12B or 12D) in which an atmosphere comprising mainly steam is maintained and which is provided with a steam inlet port (14A or 14B) which is in communication with a steam source (16A or 16B).

8. The process of any of claims 1 to 7 wherein the controlled temperature of the heated air is from 80°C to 140°C.

9. The process of any of claims 1 to 8 wherein the extruded foam board made from a thermoplastic resin has been prepared by expanding the thermoplastic resin using a blowing agent mixture of from 3 to 45 weight percent carbon dioxide, from 5 to 97 weight percent ethyl chloride and from 0 to 90 weight percent dichlorodifluoromethane and/or 1-chloro-1,1-difluoroethane, based on the total mixture weight, the blowing agent mixture being utilized at a level of 3 to 18 weight parts per 100 weight parts thermoplastic resin.

## Revendications

1. Procédé pour diminuer la densité d'un panneau extrudé, en matériau mousse réalisé à partir d'une résine thermoplastique et ayant une épaisseur de 1 cm ou plus, de façon réglable, dans un dispositif d'expansion (10 ou 11), en l'exposant simultanément ou succèssivement à de l'air chaud et à de la vapeur d'eau et en réglant la température de l'air dans le domaine allant de 60°C à 150°C et/ou l'humidité relative dans le domaine allant de 20 à 100 pour cent dans le dispositif d'expansion, la réduction de densité étant réalisée à une pression d'environ un bar.

2. Procédé de la revendication 1, dans lequel le temps de séjour du panneau en mousse dans le dispositif d'expansion est maintenu constant.

3. Procédé de la revendication 1 ou 2, dans lequel un panneau continu extrudé en matériau mousse de résine thermoplastique est transporté à travers le dispositif d'expansion.

4. Procédé de l'une quelconque des revendications 1 à 3 dans lequel la résine thermoplastique est un polymère styrènique, de préférence du polystyrène ou du poly (p - méthylstyrène).

5. Procédé de l'une quelconque des revendications 1 à 4 dans lequel la réduction de densité du panneau en mousse est réalisée dans un dispositif d'expansion (11), comprenant au moins une chambre (12) dans laquelle est maintenue simultanément une atmosphère de vapeur d'eau et d'air chaud et qui est équipée

a) d'une entrée de vapeur d'eau (14) qui est en communication avec une source de vapeur d'eau (16), et,

b) d'une entrée d'air (18) qui est la même que l'entrée de vapeur d'eau (14) ou qui en diffère, laquelle entrée d'air est en communication avec une source d'air (20).

6. Procédé de la revendication 5 dans lequel l'humidité relative réglée dans la chambre se situe entre 35 et 85 pour cent.

7. Procédé de l'une quelconque des revendications 1 à 4 dans lequel la réduction de densité du panneau de mousse est réalisée dans un dispositif d'expansion (10) comprenant

a) au moins une chambre d'air (12 A, 12 C ou 12 E), dans laquelle est maintenue une atmosphère comprenant essentiellement de l'air chaud et qui est équipée d'une entrée d'air (18 A, 18 B ou 18 C) qui est en communication avec une source d'air (20 A, 20 B et 20 C) et

b) au moins une chambre de vapeur d'eau (12 B ou 12 D), dans laquelle est maintenue une atmosphère comprenant essentiellement de la vapeur d'eau et qui est équipée d'une entrée de vapeur d'eau (14 A ou 14 B) qui est en communication avec une source de vapeur d'eau (16 A ou 16 B)

8. Procédé de l'une quelconque des revendications 1 à 7 dans lequel la température réglée de l'air chaud est comprise entre 80°C et 140°C.

9. Procédé de l'une quelconque des revendications 1 à 8 dans lequel le panneau extrudé en matériau mousse réalisé à partir d'une résine thermoplastique a été préparé par expansion de la résine thermoplastique à l'aide d'un mélange d'agents de gonflement comprenant 3 à 45% en poids de dioxyde de carbone, de 5 à 97% en poids de chlorure d'éthyle et de 0 à 90% en poids de dichlorodifluorométhane et/ou 1-chloro-1,1-difluoroéthane-, par rapport au poids total du mélange, le mélange d'agents de gonflement étant utilisé dans la proportion de 3 à 18 parties pondérales pour 100 parties pondérales de résine thermoplastique.

## Patentansprüche

1. Verfahren zum Verringern der Dichte einer extrudierten Schaumplatte, die aus einem thermoplastischen Harz in steuerbarer Form in einer Expansionseinrichtung (10 oder 11) hergestellt wird und eine Dicke von 1 cm oder mehr hat, durch gleichzeitiges oder aufeinanderfolgendes Aussetzen erwärmter Luft und Dampf und durch Steuern der Lufttemperatur im Bereich von 60°C bis 150°C und/oder der relativen Feuchtigkeit im Bereich von 20 bis 100% in der Expansionseinrichtung, wobei die Verringerung der Dichte bei einem Druck von etwa 1 Bar ausgeführt wird.

2. Verfahren nach Anspruch 1, dadurch gekennzeichnet, daß die Aufenthaltszeit der Schaumplatte in der Expansionseinrichtung konstant gehalten wird.

3. Verfahren nach Anspruch 1 oder 2, dadurch gekennzeichnet, daß eine endlose, extrudierte Schaumplatte aus einem thermoplastischen Harz durch die Expansionseinrichtung transportiert wird.

4. Verfahren nach jedem der Ansprüche 1 bis 3, dadurch gekennzeichnet, daß das thermoplastische Harz ein Styrolpolymer ist, vorzugsweise Polystyrol oder Poly(p-methylstyrol).

5. Verfahren nach jedem der Ansprüche 1 bis 4, dadurch gekennzeichnet, daß die Verringerung der Dichte der Schaumplatte in einer Expansionseinrichtung (11) ausgeführt wird, enthaltend mindestens eine Kammer (12), in der gleichzeitig eine Atmosphäre aus Dampf und erwärmter Luft aufrechterhalten wird und die versehen ist mit

a) einer Dampfeinlaßöffnung (14), die in Verbindung mit einer Dampfquelle (16) steht, und

b) einer Lufteinlaßöffnung (18), die die gleiche wie die Dampfeinlaßöffnung (14) oder eine andere ist, und wobei die Lufteinlaßöffnung in Verbindung mit einer Luftquelle (20) steht.

6. Verfahren nach Anspruch 5, dadurch gekennzeichnet, daß die gesteuerte relative Feuchtigkeit in der Kammer von 35 bis 85% beträgt.

7. Verfahren nach jedem der Ansprüche 1 bis 4, dadurch gekennzeichnet, daß die Verringerung der Dichte der Schaumplatte in einer Expansionseinrichtung (10) ausgeführt wird, enthaltend

a) mindestens eine Luftkammer (12A, 12C oder 12E), in der eine hauptsächlich erwärmte Luft enthaltende Atmosphäre aufrechterhalten wird und die mit einer Lufteinlaßöffnung (18A, 18B oder 18C), die in Verbindung mit einer Luftquelle (20A, 20B oder 20C) steht, versehen ist, und

b) mindestens eine Dampfkammer (12B oder 12D), in der eine hauptsächlich Dampf enthaltende Atmosphäre aufrechterhalten wird und die mit einer Dampfeinlaßöffnung (14A oder 14B), die in Verbindung mit einer Dampfquelle (16A oder 16B) steht, versehen ist.

8. Verfahren nach jedem der Ansprüche 1 bis 7, dadurch gekennzeichnet, daß die gesteuerte Temperatur der erwärmten Luft von 80°C bis 140°C beträgt.

9. Verfahren nach jedem der Ansprüche 1 bis 8, dadurch gekennzeichnet, daß die aus einem thermoplastischen Harz hergestellte, extrudierte Schaumplatte hergestellt wurde durch Expandieren des thermoplastischen Harzes unter Verwendung einer Treibmittelmischung aus 3 bis 45 Gew.-% Kohlendioxid, 5 bis 97 Gew.-% Ethylchlorid und 0 bis 90 Gew.-% Dichlordifluormethan und/oder 1-Chlor-1,1-difluorethan, bezogen auf Gesamtgewicht der Mischung, wobei die Treibmittelmischung in einer Menge von 3 bis 18 Gewichtsteilen pro 100 Gewichtsteile thermoplastisches Harz verwendet wird.

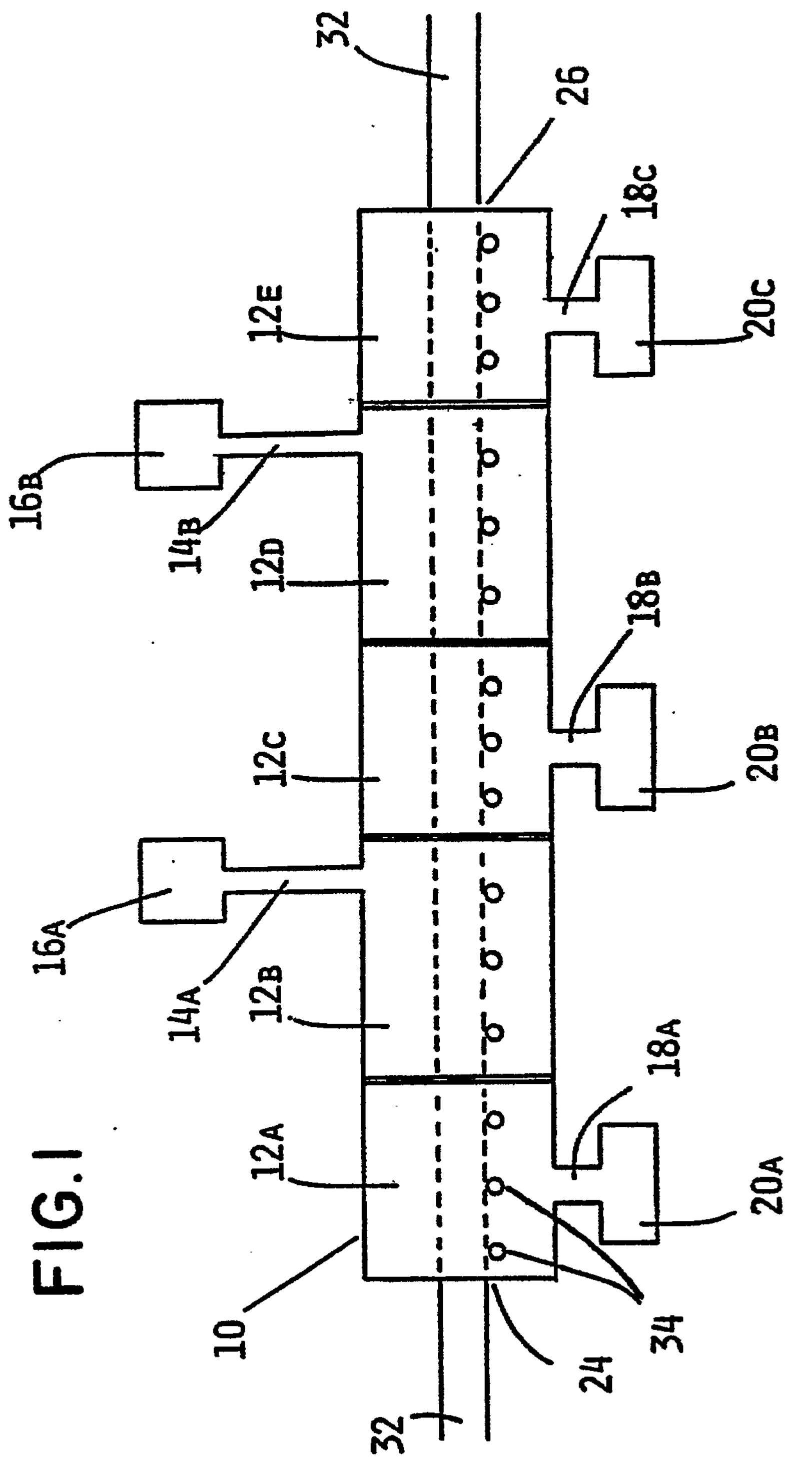
10
12A
12B
12C
12D
12E
14A
14B
16A
16B
18A
18B
18C
20A
20B
20C
24
26
32
32
34

FIG. I

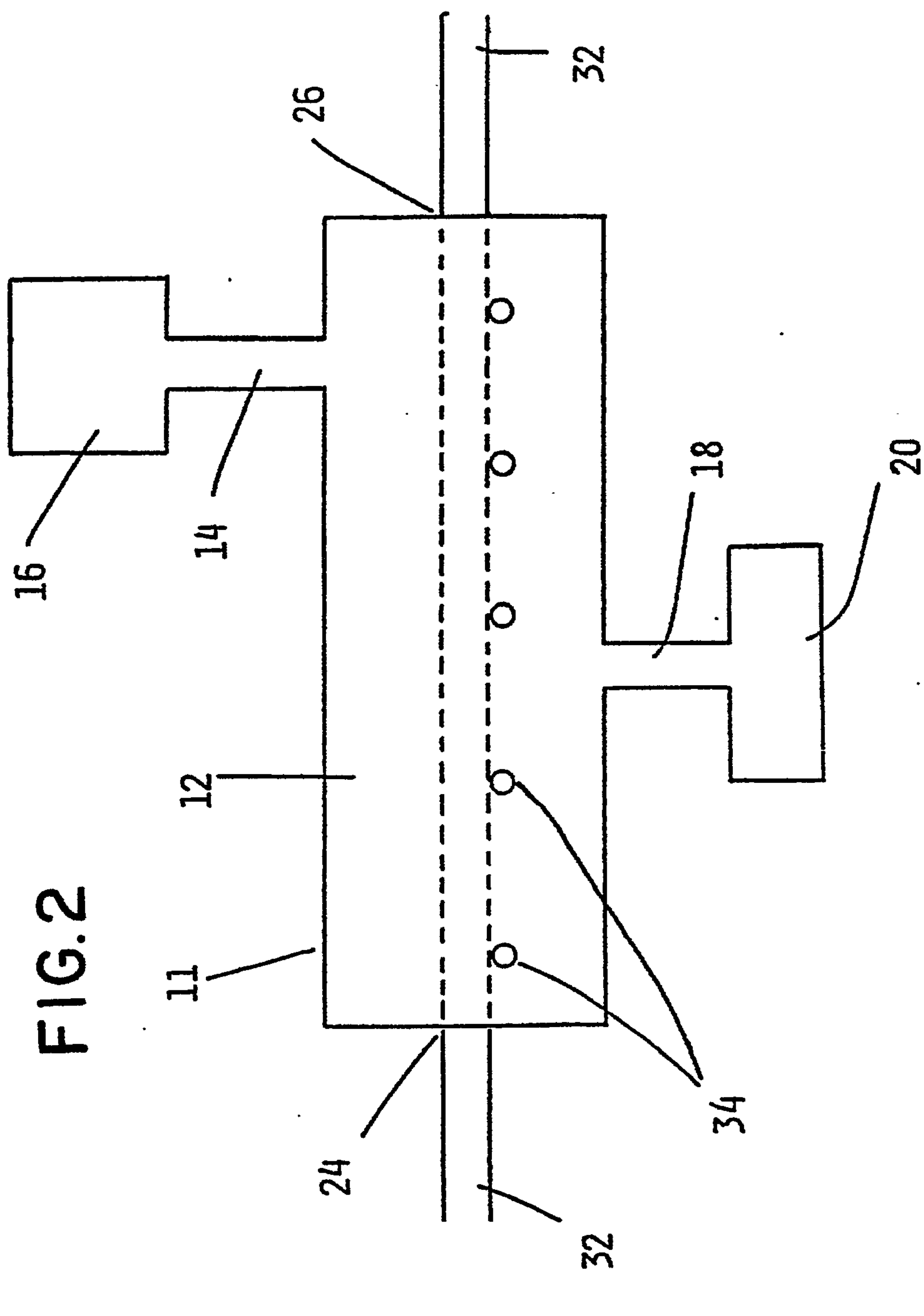


FIG.2